(19)

**Europäisches Patentamt**
**European Patent Office**
**Office européen des brevets**

(11) **EP 4 760 622 A1**

(12) **EUROPEAN PATENT APPLICATION**

(43) Date of publication:
**17.06.2026 Bulletin 2026/25**

(51) International Patent Classification (IPC):
**G06Q 30/0201** (2023.01)   **G06Q 30/0202** (2023.01)
**G06Q 30/0204** (2023.01)   **G06Q 30/0601** (2023.01)

(21) Application number: **25203551.4**

(22) Date of filing: **22.09.2025**

(52) Cooperative Patent Classification (CPC):
**G06Q 30/0206; G06Q 30/0201; G06Q 30/0202;**
**G06Q 30/0204; G06Q 30/0631**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.12.2024 IN 202421097229**

(71) Applicant: **Tata Consultancy Services Limited
Mumbai, Maharashtra 400 021 (IN)**

(72) Inventors:
• **SWAMI, Aakash**
  **Delhi, Delhi 110001 (IN)**
• **GUGULOTHU, Narendhar**
  **Hyderabad, Telangana 500081 (IN)**
• **VINNAKOTA, Tirumala Rao**
  **Hyderabad, Telangana 500081 (IN)**
• **BHAT, Sanjay Purushottam**
  **Hyderabad, Telangana 500081 (IN)**

(74) Representative: **Goddar, Heinz J.
Boehmert & Boehmert
Anwaltspartnerschaft mbB
Pettenkoferstrasse 22
80336 München (DE)**

(54) **METHODS AND SYSTEMS FOR BUNDLE PURCHASE PROBABILITY ESTIMATION AND REVENUE-MAXIMIZED BUNDLES RECOMMENDATION TO CUSTOMER SEGMENT**

(57) The disclosure relates generally to methods and systems for bundle purchase probability estimation and revenue-maximized bundles recommendation to customer segment. Conventional techniques mostly focused on customer-item, customer-bundle, or customer-item-bundle interactions, but do not model interactions among customer segments, items, and prices to form the bundles. The present disclosure discloses an approach for ancillary bundle recommendation using an item-level purchase data for a given customer segment. Firstly, the item-level sales data is converted into the bundle-level sales data having a plurality of ancillary bundles. Then, a nested MLP network is trained which can predict the probability of purchase of a given ancillary bundle at a given price for a specific customer segment. Further, the ancillary bundles are priced for given customer segment by maximizing the revenue. Finally, the recommendations are provided for given customer segment by ranking ancillary bundles based on their estimated revenue by selecting the top-N bundles.

FIG. 5

EP 4 760 622 A1

**Description**

CROSS-REFERENCE TO RELATED APPLICATIONS AND PRIORITY

The present application claims priority to Indian application no. 202421097229, filed on December 10, 2024.

TECHNICAL FIELD

The disclosure herein generally relates to item bundle recommendation, and, more particularly, to methods and systems for bundle purchase probability estimation and revenue-maximized bundles recommendation to customer segment.

BACKGROUND

Ancillary revenue through ancillary bundle recommendations has become vital for significant boosting of overall transaction value in many service industries such as hospitality industries, travel industries, tourism, and so on. These ancillary bundle recommendations offer additional products or services alongside a primary product and enhance revenue and improve customer satisfaction. However, creating effective ancillary bundle recommendations is quite challenging due to diverse dimensionality such as different customer segment, location, competitive marketing, different seasons, and so on. For example, an airline industry must strategically decide how to bundle items like food, drinks, and in-flight entertainment in different inbound and outbound journey considering diverse customer segment, season and competitive and sustain strategy from competitors.

To address this challenge, businesses such as the airline industry can leverage historical ancillary sales data that captures which ancillary services and/or products customers have purchased individually or in combination. By analyzing the historical ancillary sales data, an optimal bundling strategy is to be developed that not only appeals to different customer segments but also drives additional sales and maximizes overall revenue of the service industries.

Conventional techniques for the ancillary bundle recommendations mostly focused on customer-item, customer-bundle, or customer-item-bundle interactions, but does not model interactions among customer segments, items, and prices to form the bundles. This means that while they may effectively suggest items or bundles that customers are likely to purchase together, they do not optimize the pricing strategy to maximize revenue. Incorporating pricing into the recommendation process is crucial in certain applications, as it can significantly influence purchase decisions and overall profitability. Additionally, segment-based recommendations are particularly useful in situations with limited data, broad audience targeting, and specific business objectives that favor a more generalized approach.

Furthermore, the conventional techniques rarely address bundle pricing comprehensively, often focusing on discount strategies rather than optimizing for maximum bundle revenue. Despite the growing interest in using machine learning (ML)/deep learning (DL) for demand estimation and pricing, existing research predominantly focuses on item pricing rather than bundle pricing and recommendations. Also, while some earlier studies seek to maximize the expected revenue of a bundle and make recommendations, they do not employ the ML/ DL based approaches to leverage item-level purchase data for segment-specific bundle recommendations that maximize revenue.

SUMMARY

Embodiments of the present disclosure present technological improvements as solutions to one or more of the above-mentioned technical problems recognized by the inventors in conventional systems.

In an aspect, a processor-implemented method for bundle purchase probability estimation and revenue-maximized bundles recommendation to customer segment is provided. The method including the steps of: receiving an item-level purchase data of an entity, wherein the item-level purchase data comprises one or more customer attributes of each customer of a plurality of customers, a plurality of items shown to each customer of the plurality of customers, an offered price of each of the plurality of items, one or more items purchased by each customer of the plurality of customers out of the plurality of items, and one or more item attributes of each item of the plurality of items; identifying one or more customer segments based on the one or more customer attributes of each customer of the plurality of customers, wherein each customer segment of the one or more customer segments is associated with one or more customers out the plurality of customers; forming a plurality of ancillary bundles associated with each customer segment of the one or more customer segments using the item-level purchase data, wherein each of the plurality of ancillary bundles comprises one or more items out of the plurality of items and the offered price of each of the one or more items; estimating a bundle purchase probability of each of the plurality of ancillary bundles associated with each customer segment of the one or more customer segments, using a bundle purchase probability estimation model; determining a revenue maximized bundle price of each of the plurality of ancillary bundles associated with each customer segment of the one or more customer segments, based on the bundle purchase probability of each of the plurality of ancillary bundles; and recommending one or more ancillary bundles out of the plurality of ancillary bundles, based on the revenue maximized bundle price of each of the plurality of ancillary bundles.

In another aspect, a system for bundle purchase probability estimation and revenue-maximized bundles recommendation to customer segment is provided. The system includes: a memory storing instructions; one or more Input/Output (I/O) interfaces; and one or more hardware processors coupled to the memory via the one or more I/O interfaces, wherein the one or more hardware processors are configured by the instructions to: receive an item-level purchase data of an entity, wherein the item-level purchase data comprises one or more customer attributes of each customer of a plurality of customers, a plurality of items shown to each customer of the plurality of customers, an offered price of each of the plurality of items, one or more items purchased by each customer of the plurality of customers out of the plurality of items, and one or more item attributes of each item of the plurality of items; identify one or more customer segments based on the one or more customer attributes of each customer of the plurality of customers, wherein each customer segment of the one or more customer segments is associated with one or more customers out the plurality of customers; form a plurality of ancillary bundles associated with each customer segment of the one or more customer segments using the item-level purchase data, wherein each of the plurality of ancillary bundles comprises one or more items out of the plurality of items and the offered price of each of the one or more items; estimate a bundle purchase probability of each of the plurality of ancillary bundles associated with each customer segment of the one or more customer segments, using a bundle purchase probability estimation model; determine a revenue maximized bundle price of each of the plurality of ancillary bundles associated with each customer segment of the one or more customer segments, based on the bundle purchase probability of each of the plurality of ancillary bundles; and recommend one or more ancillary bundles out of the plurality of ancillary bundles, based on the revenue maximized bundle price of each of the plurality of ancillary bundles.

In yet another aspect, there are provided one or more non-transitory machine-readable information storage mediums comprising one or more instructions which when executed by one or more hardware processors cause: receiving an item-level purchase data of an entity, wherein the item-level purchase data comprises one or more customer attributes of each customer of a plurality of customers, a plurality of items shown to each customer of the plurality of customers, an offered price of each of the plurality of items, one or more items purchased by each customer of the plurality of customers out of the plurality of items, and one or more item attributes of each item of the plurality of items; identify one or more customer segments based on the one or more customer attributes of each customer of the plurality of customers, wherein each customer segment of the one or more customer segments is associated with one or more customers out the plurality of customers; forming a plurality of ancillary bundles associated with each customer segment of the one or more customer segments using the item-level purchase data, wherein each of the plurality of ancillary bundles comprises one or more items out of the plurality of items and the offered price of each of the one or more items; estimating a bundle purchase probability of each of the plurality of ancillary bundles associated with each customer segment of the one or more customer segments, using a bundle purchase probability estimation model; determining a revenue maximized bundle price of each of the plurality of ancillary bundles associated with each customer segment of the one or more customer segments, based on the bundle purchase probability of each of the plurality of ancillary bundles; and recommending one or more ancillary bundles out of the plurality of ancillary bundles, based on the revenue maximized bundle price of each of the plurality of ancillary bundles.

In an embodiment, the plurality of ancillary bundles is formed for each of the one or more customer segments based on a number of bundle combinations associated with the one or more items shown to the one or more customers present in the associated customer segment.

In an embodiment, the bundle purchase probability estimation model is obtained, by: obtaining a training data associated with each of the one or more historical customer segments using a historical item-level purchase data, wherein the training data associated with each historical customer segment comprises the one or more customer attributes of each customer of the one or more customers present in an associated historical customer segment, the one or more items shown to the one or more customers present in the associated historical customer segment, the offered price of each of the one or more items shown to the one or more customers present in the associated historical customer segment, the one or more item attributes of each item of the one or more items shown to the one or more customers present in the associated historical customer segment, the plurality of historical ancillary bundles formed for the associated historical customer segment, and a bundle purchase ground-truth value of each of the plurality of historical ancillary bundles formed for the associated historical customer segment; and training a nested Multi-layer Perceptron (MLP) neural network with the training data associated with each of the one or more historical customer segments, to obtain the bundle purchase probability estimation model, wherein the nested MLP neural network comprises a plurality of item-level MLP neural networks and a bundle purchase probability prediction function, and wherein each of the plurality of item-level MLP neural networks comprises an embedding layer, a concatenation layer, a MLP layer, and a sigmoid layer.

In an embodiment, the bundle purchase ground-truth value of each of the plurality of historical ancillary bundles formed for each of the one or more customer segments is defined based on the one or more items purchased by each customer of the one or more customers present in the associated customer segment.

In an embodiment, the nested MLP neural network is trained with the training data associated with each of the one or more historical customer segments, to obtain the bundle purchase probability estimation model, by: passing individually (i) the one or more customer attributes of each customer of the one or more customers present in each historical customer segment, (ii) the one or more item attributes of each item shown to the one or more customers present in each historical customer segment, to the embedding layer of each of the plurality of item-level MLP neural networks, to obtain (i) a customer attribute embedding of each customer of the one or more customers present in each historical customer segment, and (ii) an item attribute embedding of each item shown to the one or more customers present in each historical customer segment, respectively; passing individually, (i) the customer attribute embedding of each customer of the one or more customers present in each historical customer segment, (ii) the item attribute embedding of each item shown to the one or more customers present in each historical customer segment, and (iii) the offered price of each item shown to the one or more customers present in each historical customer segment, to the concatenation layer of each of the plurality of item-level MLP neural networks, to obtain an item-level concatenated vector of each item shown to the one or more customers present in each historical customer segment, respectively; passing individually, the item-level concatenated vector of each item shown to the one or more customers present in each historical customer segment, to the MLP layer and the sigmoid layer of each of the plurality of item-level MLP neural networks, to obtain a probability of purchase of each item shown to the one or more customers present in each historical customer segment, respectively; passing the probability of purchase of each item shown to the one or more customers present in each historical customer segment, to the bundle purchase probability prediction function, to obtain a bundle purchase probability value of each of the plurality of historical ancillary bundles formed for each historical customer segment; calculating a value of a loss function of the nested MLP neural network, based on the bundle purchase probability value of each of the plurality of historical ancillary bundles formed for each historical customer segment and the bundle purchase ground-truth value of each of the plurality of historical ancillary bundles formed for each historical customer segment; updating one or more network weights of the nested MLP neural network based on the value of the loss function of the nested MLP neural network; and training the nested MLP neural network with the training data associated with each of the one or more historical customer segments, until the one or more historical customer segments are completed, to obtain the bundle purchase probability estimation model.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an exemplary block diagram of a system for bundle purchase probability estimation and revenue-maximized bundles recommendation to customer segment, in accordance with some embodiments of the present disclosure.

FIG. 2 is an exemplary block diagram illustrating a plurality of modules of the system of FIG. 1, for the bundle purchase probability estimation and revenue-maximized bundles recommendation to customer segment, in accordance with some embodiments of the present disclosure.

FIG. 3 illustrates an exemplary flow diagram of a processor-implemented method for bundle purchase probability estimation and revenue-maximized bundles recommendation to customer segment, using the system of FIG. 1, in accordance with some embodiments of the present disclosure.

FIG. 4 shows exemplary ancillary bundles from two customers and two items, in accordance with some embodiments of the present disclosure.

FIG. 5 shows an exemplary architecture of a nested Multi-layer Perceptron (MLP) neural network, in accordance with some embodiments of the present disclosure.

FIGS. 6A-6B illustrate exemplary flow diagrams showing steps for obtaining a bundle purchase probability estimation model by training a nested MLP neural network, using the system of FIG. 1, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Ancillary revenues and targeted offers for diverse customers have become increasingly relevant. Consequently, service providers have begun recommending customized bundled ancillary offers to specific customers. Ancillary bundle recommendation involves selling one or more ancillary products as a single unit and entails pricing and assortment optimization. The ancillary bundle recommendation approaches are classified into several categories such as constraint-based approaches, data mining-based approaches, preference elicitation-based approaches, factorization-based approaches, sequence-based neural approaches, attention-based approaches, and graph-based neural approaches.

The conventional constraint-based approaches either minimize cost or maximize the expected revenue of a bundle, while others incorporate factors like season, price, ratings, and customer preferences for bundle recommendations. In contrast, preference elicitation approaches learn utility functions to capture customer preferences across attributes such as cost and quality for bundles through customer feedback. Among these approaches, a model was disclosed that offers customized discounted product bundles to online customers by balancing profit maximization and inventory management while tailoring product selections to consumer preferences. Consumers are characterized by a combination of categorical and continuous attributes. Another conventional technique employs collaborative filtering, a personalized demand graph, Jaccard similarity, and expected revenue/purchasing probability optimization to provide top-N bundle recommendations with personalized pricing for each bundle. Another technique used customer-item interaction data for bundle recommendations, segmenting customers based on trip characteristics. Another technique utilized customer-item interaction data to form bundles, which are created for a segment based on itemset frequency, clique detection, and other techniques, and then displayed to customers within that segment. Pricing in this technique is determined using Thompson sampling.

The data mining-based approaches, factorization-based approaches, sequence-based neural approaches, attention-based approaches, and graph-based neural approaches model customer-item, customer-bundle, or customer-item-bundle interactions to recommend bundles. Among the factorization-based approaches, a Bayesian Personalized Ranking (BPR) model was proposed for bundle ranking without considering pricing, with plans to defer the recommendation to segmented customers as future work. In the sequence-based neural approaches, a sequence generation model was proposed which integrates masked beam search and determinantal point processes (DPP) selection to produce high-quality, diversified bundle. Among the attention-based approaches, a factorized attention network was introduced that aggregates items within a bundle to form a bundle representation and simultaneously models both customer-bundle and customer-item interactions. In the graph-based neural approaches, Graph Convolutional Networks (GCNs) were employed to capture the intricate relationships within a bundle, as well as between customers and bundles. However, these above conventional approaches do not incorporate pricing, and the bundle recommendation thus is not efficient.

To address the absence of negative data, early works proposed two strategies: treating all missing data as negative instances, or sampling negative instances from missing data. Furthermore, there has been growing interest in using machine learning for demand estimation. A pricing model was proposed with two components: (i) an ancillary purchase probability model structured as a binary classification problem, and (ii) a revenue optimization model recommending prices to maximize expected revenue. However, this work does not address the bundles. Another work applied dynamic pricing to item listings using a binary classification model to predict booking probabilities, but it also does not address bundles.

Thus, the conventional techniques for the ancillary bundle recommendations mostly focused on customer-item, customer-bundle, or customer-item-bundle interactions, but does not model interactions among customer segments, items, and prices to form the bundles.

The present disclosure solves the technical problems in the art with methods and systems for bundle purchase probability estimation and revenue-maximized bundles recommendation to customer segment. The present disclosure discloses an approach for ancillary bundle recommendation using an item-level purchase data for a given customer segment, defined based on customer attributes. While many service providers lack bundle-level purchase data, item-level purchase data is readily available. Thus, the methods and systems of the present disclosure (referred as 'Neural Segment-based Ancillary Bundle Recommendation (NSABR)') leverages item-level purchase data and involves several key steps: First, in data preparation, the item-level sales data is converted to bundle-level sales data. Then, for each purchase event, non-purchased ancillary bundles are sampled to ensure that the training dataset includes both positive (purchased) and negative (not purchased) instances. Second, a neural network-based binary classification model such as nested MLP network is employed is trained to predict the probability of purchase of a given ancillary bundle at a given price for a specific customer segment. Third, the ancillary bundles are priced for a given customer segment by maximizing the revenue. Finally, the recommendations are provided for a given customer segment by ranking ancillary bundles based on their estimated revenue by selecting the top-N bundles.

The methods and systems of the present disclosure create relevant ancillary bundles for specific customer segments, tailored to enhance customer satisfaction and increase profitability using historical ancillary item purchase data.

In the present disclosure, the terms 'ancillary bundle' and 'bundle' are used interchangeably for simplicity. Unless otherwise specified, 'bundle' refers to an ancillary bundle with one or more products, one or more services, or a combination thereof.

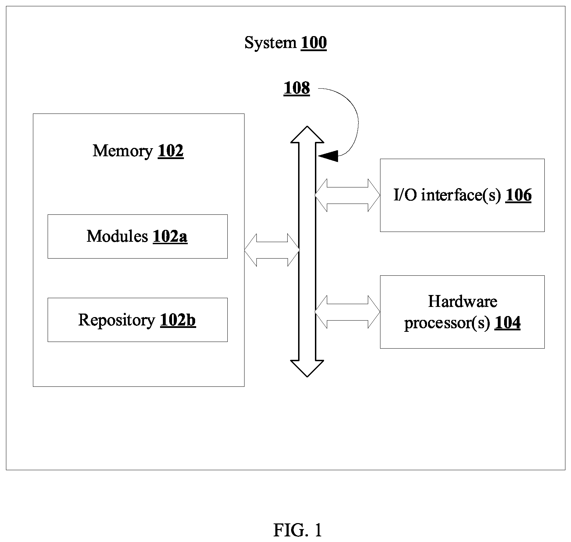

Referring now to the drawings, and more particularly to FIG. 1 through FIG. 6B, where similar reference characters denote corresponding features consistently throughout the figures, there are shown preferred embodiments, and these embodiments are described in the context of the following exemplary system and/or method.

FIG. 1 is an exemplary block diagram of a system 100 for bundle purchase probability estimation and revenue-maximized bundles recommendation to customer segment, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical customer interface (GUI), and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

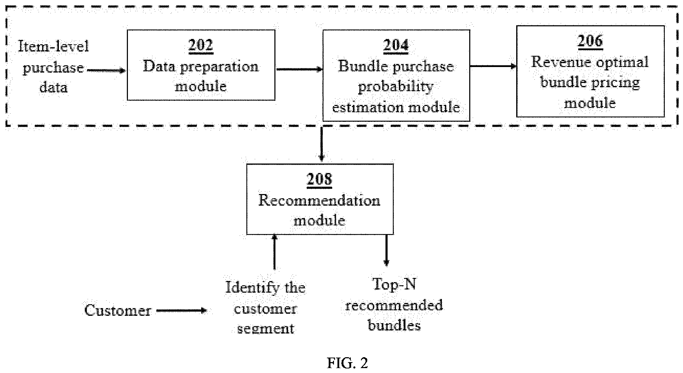

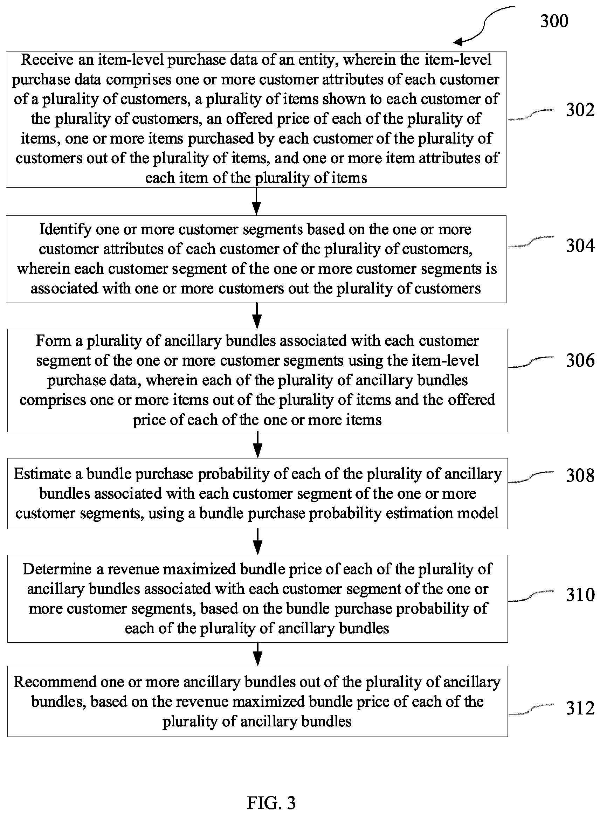

Referring collectively to FIG. 2 and FIG. 3, components and functionalities of the system 100 are described in accordance with an example embodiment of the present disclosure. For example, FIG. 2 is an exemplary block diagram illustrating the plurality of modules 102a of the system 100 of FIG. 1, for bundle purchase probability estimation and revenue-maximized bundles recommendation to customer segment, in accordance with some embodiments of the present disclosure. In an embodiment, the plurality of modules 102a include a data preparation module 202, a bundle purchase probability estimation module 204, a revenue optimal bundle pricing module 206, and a recommendation module 208.

In an embodiment, the data preparation module 202 is configured to convert the item-level historical purchase data into a bundle-level data that more accurately reflects customer bundle choices (attributes) for each customer segment. The bundle purchase probability estimation module 204 is configured to estimate the probability of purchase of each bundle at a given price. The bundle purchase probability estimation module 204 makes use of the neural network-based model such as the nested MLP network.

The revenue optimal bundle pricing module 206 is configured to determine the optimal prices for each bundle associated to each customer segment based on the estimated probability of purchase such that the revenue is maximized. This yields revenue estimates for all bundles across all customer segments, allowing to rank the bundles based on their revenue potential. The recommendation module 208 is configured to recommend the top-N bundles ranked based on the estimated revenue when the customer arrives and the customer segment is identified based on customer features (attributes).

For example, FIG. 3 illustrates an exemplary flow diagram of a processor-implemented method 300 for bundle purchase probability estimation and revenue-maximized bundles recommendation to customer segment, using the system 100 of FIG. 1, in accordance with some embodiments of the present disclosure. Although steps of the method 300 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 302 of the method 300, the one or more hardware processors 104 of the system 100 are configured to receive an item-level purchase data of an entity whose ancillary bundles are formed and to be recommended to the customers based on their segment. The item-level purchase data includes one or more customer attributes of each customer of a plurality of customers, a plurality of items shown to each customer of the plurality of customers, an offered price of each of the plurality of items, one or more items purchased by each customer of the plurality of customers out of the plurality of items, and one or more item attributes of each item of the plurality of items.

In an embodiment, the item includes but is not limited to a product, service, utility, or a combination thereof. The one or more customer attributes are defined towards the items they are interested in. For example, in the airline industry, the one or more customer attributes of the customer (passenger) include total time of journey, inbound route, outbound route, flight start time, extra luggage allowance, extra beverages, and so on. The offered price of each of the plurality of items is defined as the price of the item shown to the customer. In an embodiment, the one or more item attributes of each item include but is not limited to item quantity, item quality, and so on.

At step 304 of the method 300, the one or more hardware processors 104 of the system 100 are configured to identify one or more customer segments based on the one or more customer attributes of each customer of the plurality of customers. Each customer segment of the one or more customer segments is associated with the one or more customers out of the plurality of customers. In simple terms, the one or more customers whose one or more customer attributes are common or similar are formed into one segment. For example, the customers whose inbound route, outbound route, and flight start time requirements are common are formed into one segment.

At step 306 of the method 300, the one or more hardware processors 104 of the system 100 are configured to form a plurality of ancillary bundles associated with each customer segment of the one or more customer segments using the item-level purchase data. Each of the plurality of ancillary bundles comprises include one or more items out of the plurality of items and the offered price of each of the one or more items.

The plurality of ancillary bundles is formed for each of the one or more customer segments based on a number of bundle combinations associated with the one or more items shown to the one or more customers present in the associated customer segment. In simple terms, all possible combinations of the items shown are formed as ancillary bundles. Mathematically, if there are n number of items shown to the customers in a particular segment, then $2^n$ ancillary bundle combinations are formed to the customers present in the associated customer segment.

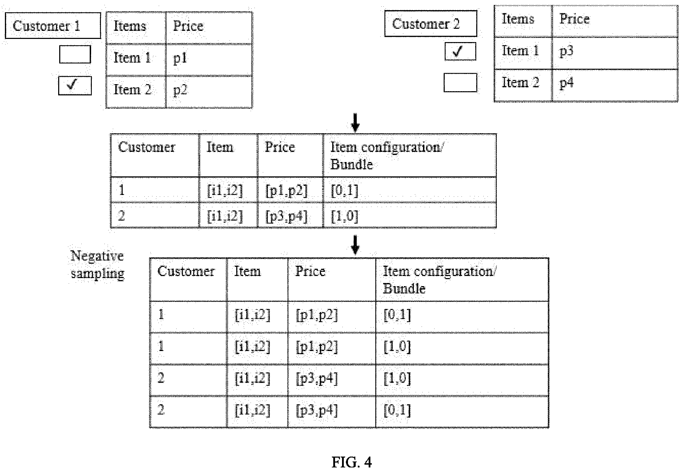

The data preparation module 202 is configured to convert the item-level historical purchase data into the ancillary bundle-level data for each customer segment. This involves defining all possible bundle combinations and replacing selected item/items with corresponding bundle, treating single items as bundles. Then, for each purchase event, the ancillary bundles are sampled from the non-purchased ones to ensure the dataset includes both positive (purchased) and negative (not purchased) instances. FIG. 4 shows exemplary ancillary bundles from two customers and two items, in accordance with some embodiments of the present disclosure.

At step 308 of the method 300, the one or more hardware processors 104 of the system 100 are configured to estimate a bundle purchase probability of each of the plurality of ancillary bundles associated with each customer segment of the one or more customer segments, using a bundle purchase probability estimation model. The bundle purchase probability estimation model estimates the bundle purchase probability of each ancillary bundle. The bundle purchase probability ranges from 0-1 where '1' indicates more chances of bundle purchase by the customer in the associated customer segment, and where '1' indicates no chance of bundle purchase by the customer in the associated customer segment.

The bundle purchase probability estimation model is obtained by training a nested Multi-layer Perceptron (MLP) neural network with the training data associated with each of the one or more historical customer segments. The training data associated with each of the one or more historical customer segments are obtained using a historical item-level purchase data. The historical item-level purchase data includes the item-level purchased data of each customer in the past as explained at step 302 of the method 300.

The training data associated with each historical customer segment includes one or more customer attributes of each customer of the one or more customers present in an associated historical customer segment, the one or more items shown to the one or more customers present in the associated historical customer segment, the offered price of each of the one or more items shown to the one or more customers present in the associated historical customer segment, the one or more item attributes of each item of the one or more items shown to the one or more customers present in the associated historical customer segment, the plurality of historical ancillary bundles formed for the associated historical customer segment, and a bundle purchase ground-truth value of each of the plurality of historical ancillary bundles formed for the associated historical customer segment.

The bundle purchase ground-truth value of each of the plurality of historical ancillary bundles. This shows whether that bundle is selected or not (0/1). Thus, the bundle purchase ground-truth value of each of the plurality of historical ancillary bundles formed for each of the one or more customer segments is defined based on the one or more items purchased by each customer of the one or more customers present in the associated customer segment. Table. 1 in the experimental section shows a sample training data associated with a historical customer segment. As shown in Table. 1, the bundle purchase ground-truth value is mentioned as 1 when the bundle is purchased by one of the customers in that customer segment, otherwise it is 0.

The training data associated with each historical customer segment (having one or more customers visited in prior and grouped as one segment) is obtained by first defining all possible bundle combinations and replacing selected item/items with the corresponding bundle, treating single items as bundles. Then, for each purchase event, the ancillary bundles are sampled from the non-purchased ones to ensure the dataset includes both positive (purchased) and negative (not purchased) instances. It is a common tendency that when a customer views items and purchases one or more items, they have been exposed to all possible bundle combinations and have chosen one over the others. It should be noted that the bundle is represented by its composition, defined as a list with zeros everywhere and ones at the indexes of the items purchased in the bundle.

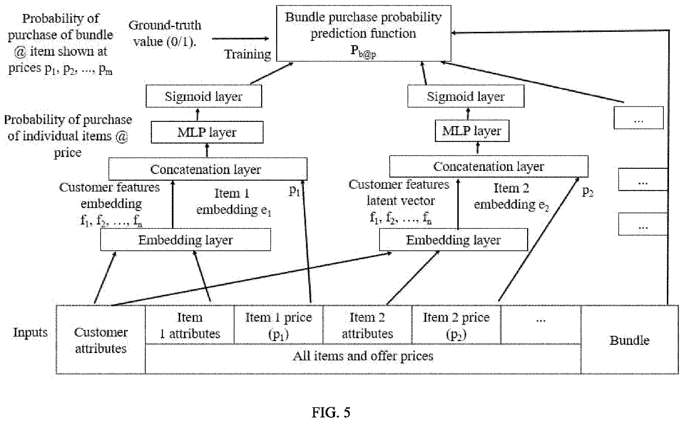

FIG. 5 shows an exemplary architecture of a nested MLP neural network, in accordance with some embodiments of the present disclosure. As shown in FIG. 5, the nested MLP neural network includes a plurality of item-level MLP neural networks and a bundle purchase probability prediction function. Each of the plurality of item-level MLP neural networks includes an embedding layer, a concatenation layer, a MLP layer, and a sigmoid layer. The number of the plurality of item-level MLP neural networks present in the nested MLP neural network is equal to the number of items present in the associated ancillary bundle.

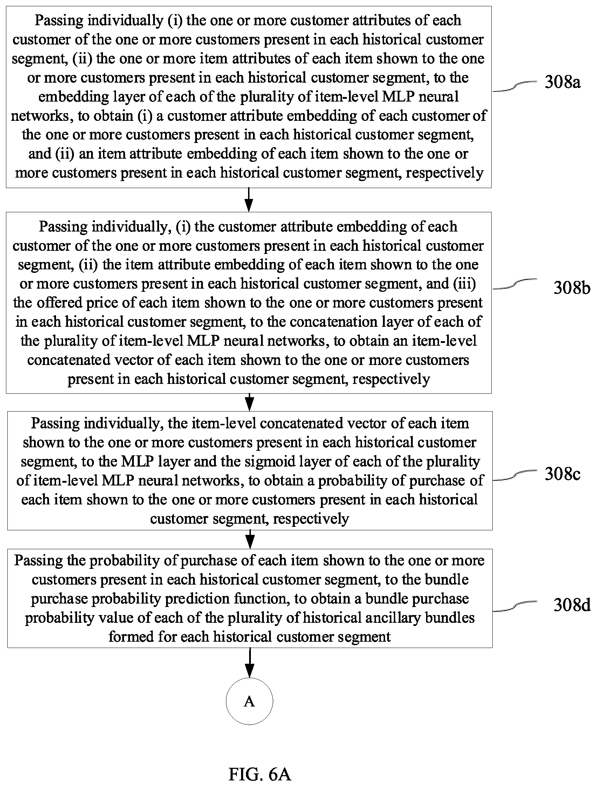

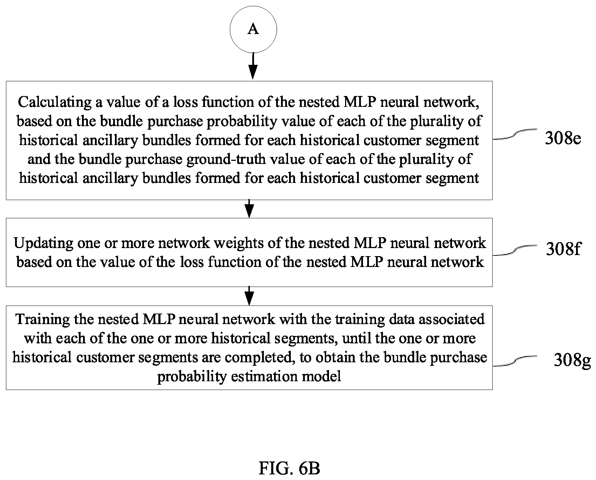

FIGS. 6A-6B illustrate exemplary flow diagrams showing steps for obtaining a bundle purchase probability estimation model by training a nested Multi-layer Perceptron (MLP) neural network, in accordance with some embodiments of the present disclosure. As shown in FIGS. 6A-6B, training the nested MLP neural network to obtain the bundle purchase probability estimation model is explained through steps 308a to 308g.

At step 308a, the one or more customer attributes (attr 1, attr 2, ..., attr n) of each customer of the one or more customers present in each historical customer segment, and the one or more item attributes (item_attr 1, item_attr 2, ..., item_attr 1) of each item shown (item 1, item 2, ..., item m) to the one or more customers present in each historical customer segment, are passed to the embedding layer of each of the plurality of item-level MLP neural networks. As a result, a customer attribute embedding $(f_1, f_2, ... , f_n)$ of each customer of the one or more customers present in each historical customer segment, and an item attributes embedding $(e_1, e_2, ..., e_m)$ of each item shown to the one or more customers present in each historical customer segment, are obtained, respectively.

At step 308b, the customer attribute embedding $(f_1, f_2, ..., f_n)$ of each customer of the one or more customers present in each historical customer segment, and the item attributes embedding $(e_1, e_2, ..., e_m)$ of each item shown to the one or more customers present in each historical customer segment, and the offered price $(p_1, p_2, ..., p_m)$ of each item shown to the one or more customers present in each historical customer segment, are passed individually to the concatenation layer of each of the plurality of item-level MLP neural networks. As a result, an item-level concatenated vector of each item shown to the one or more customers present in each historical customer segment, are obtained, respectively.

At step 308c, the item-level concatenated vector of each item shown to the one or more customers present in each historical customer segment, is passed individually to the MLP layer and the sigmoid layer of each of the plurality of item-level MLP neural networks, to obtain a probability of purchase of each item shown to the one or more customers present in each historical customer segment, respectively. The probability of purchasing item $i$ at price $p_i$ for the customer with attributes $(f_1, f_2, ... , f_n)$ is calculated by capturing nonlinear interactions among them as shown in equation (1).

$$c_{1,i} = [f_i, f_2, \dots, f_n, e_i, p_i]$$

$$c_{2,i} = a_2\big(W_2^T c_{1,i} + b_2\big)$$

$$c_{3,i} = a_3\big(W_3^T c_{2,i} + b_3\big)$$

$$\hat{P}_{i@\,p_i} = \sigma\big(W_k^T c_{(k-1),i} + b_k\big) \tag{1}$$

where $i$ denotes item $i$, $k$ represents layers in each item-level MLP network, $\hat{P}_{i@\,p_i}$ means the predicted purchase probability of item $i$ at price $p_i$, and the unique combination of attributes attr 1, attr 2, ..., attr n represents a customer segment.

At step 308d, the probability of purchase of each item shown to the one or more customers present in each historical customer segment, is passed to the bundle purchase probability prediction function, to obtain a bundle purchase probability value of each of the plurality of historical ancillary bundles formed for each historical customer segment.

Once the item-level purchase probabilities are available, the bundle purchase probability prediction function calculates the bundle purchase probability of each ancillary bundle by multiplying the probabilities of the items in the bundle and the counter-probabilities of the items not in the bundle. For example, if bundle $b$ contains items 1 and 2, and there are three items in total, the purchase probability $\hat{P}_{b@\,p}$ at price $p(p_1 + p_2)$ is defined as follows:

$$\hat{P}_{b@\,p} = \hat{P}_{i_1@\,p_1} \times \hat{P}_{i_2@\,p_2} \times (1 - \hat{P}_{i_3@\,p_3}) \tag{2}$$

where, $\hat{P}_{i_1@\,p_1}$, $\hat{P}_{i_2@\,p_2}$, and $\hat{P}_{i_3@\,p_3}$ represents predicted purchase probabilities of items 1, 2 and 3 at price $p_1$, $p_2$ and $p_3$ respectively. The probability of not purchasing item 3 at price $p_3$ is $1 - \hat{P}_{i_3@\,p_3}$. The final output layer (bundle purchase probability prediction function) of the network is the predicted purchase probability of a bundle $\hat{P}_{b@\,p}$.

At step 308e, a value of a loss function of the nested MLP neural network, is calculated based on the bundle purchase probability value of each of the plurality of historical ancillary bundles formed for each historical customer segment and the bundle purchase ground-truth value of each of the plurality of historical ancillary bundles formed for each historical customer segment.

The training is performed by minimizing the point-wise loss between $\hat{P}_{b@\,p}$ and its target bundle purchase ground-truth value using the binary cross-entropy loss function. The loss function is minimized using Adam optimizer. Thus, having the probability of purchase associated with all bundles, we optimize the selection of items to be sold together as a bundle, or in other words, perform assortment optimization.

At step 308f, one or more network weights of the nested MLP neural network are updated based on the value of the loss function of the nested MLP neural network. At step 308g, training process of the nested MLP neural network with the training data associated with each of the one or more historical customer segments is continued, until the one or more historical customer segments are completed to obtain the bundle purchase probability estimation model.

At step 310 of the method 300, the one or more hardware processors 104 of the system 100 are configured to determine a revenue maximized bundle price of each of the plurality of ancillary bundles associated with each customer segment of the one or more customer segments, based on the bundle purchase probability of each of the plurality of ancillary bundles.

With the bundle purchase probability, the optimal bundle price is calculated to maximize revenue for a given segment. In an embodiment, the revenue-optimal price is estimated using predicted probabilities and the dual annealing optimization technique. The dual annealing optimizer is trained to maximize the following revenue equation:

$$p^* = \underset{0 \leq p \leq p_{max}}{\arg\max}\ p \times \hat{P}_{b@\,p} \tag{3}$$

where $\hat{P}_{b@\,p}$ is the predicted purchase probability of the given bundle at the offered price $p$.

At step 312 of the method 300, the one or more hardware processors 104 of the system 100 are configured to recommend one or more ancillary bundles out of the plurality of ancillary bundles, based on the revenue maximized bundle price of each of the plurality of ancillary bundles. Bundle recommendations are ranked based on estimated revenue within each customer segment, and the top-N bundles with high revenue potential are recommended to a given customer. This benefits the organization by focusing on high-value bundles, ultimately increasing overall revenue.

The methods and systems of the present disclosure model the interactions among customer segments, items, and prices to form the ancillary bundles with the revenue maximized bundle price. The methods and systems of the present disclosure recommend the items or bundles that customers are likely to purchase together effectively and optimize the pricing strategy to maximize revenue.

Example Scenario:

The methods and systems of the present disclosure are explained through a case study taking the context of airline industry and experimented to evaluate the accuracy and the performance. Firstly, the customer sales data was generated and then a synthetic data-based simulator was created that replicates the interaction between the customer and bundles, helping to evaluate the performance of the present disclosure (NSABR).

Data generation: A rule-based data generation was employed to generate the customer sales data. For illustration, consider three ancillary items: food and drink, excess luggage, and airport lounge access. The customers are characterized by three trip attributes: journey hour (values: 1, 2), month of travel (values: 2, 3), and days to departure (values: 2, 15), resulting in 8 possible attribute combinations and, consequently, 8 possible bundles. The customer segments were defined by their attributes. For instance, a passenger with a journey hour of 1, a travel month of 2, and 15 days to departure is classified into the segment (1, 2, 15), and bundle recommendations are tailored for this customer segment.

To establish the relationship between customer attributes and the probability of purchase (willingness-to-pay (WTP)) for different airline ancillary items, the following set of rules were applied. Rule 1 states: if the journey hour is 2 or more, then the WTP for food and drink follows a normal distribution of N (27,3); otherwise, it follows N(15,3). Rule 2 specifies that if the travel month is 11/November, the WTP for excess luggage follows N (52,3); otherwise, it follows N (40,3). Rule 3 states: if the days to departure are 14 or fewer, the WTP for airport lounge access is N (57,3); otherwise, it follows N (45,3).

To simulate the purchase data, the customers were shown all items upon their arrival. The customer attributes were randomly sampled from predefined values, and their WTP for items is determined by randomly sampling from a predefined distribution (selected based on the customer's attributes and predefined rules). This way, the diversity was introduced into the data, as each customer is assigned a unique WTP for the items. If the WTP of the customer is greater than or equal to the offer price, the customer purchases the item/items. The generated data includes customer attributes, items shown, offer prices, and selected item/items. Subsequent data preparation steps on this dataset produce the sample training data. Table. 1 shows the exemplary sample training data for training the nested MLP network.

Table. 1

| Customer Attributes | | | Items and offer price | | | | | | Bundle | Bundle purchase ground-truth value |
|---|---|---|---|---|---|---|---|---|---|---|
| Att r 1 | Att r 2 | Att r 3 | Item 1 | p1 | item 2 | p2 | item 3 | p3 | | |
| 1 | 2 | 15 | 0 | 27. 9 | 1 | 36.1 | 2 | 44.3 | (0, 0, 1) | 0 |
| 1 | 2 | 15 | 0 | 27. 9 | 1 | 36.1 | 2 | 44.3 | (1, 1, 0) | 0 |
| 1 | 2 | 15 | 0 | 27. 9 | 1 | 36.1 | 2 | 44.3 | (0, 1, 0) | 1 |
| 1 | 2 | 15 | 0 | 27. 9 | 1 | 36.1 | 2 | 44.3 | (0, 0, 0) | 0 |
| 2 | 2 | 2 | 0 | 11. 5 | 1 | 41.0 | 2 | 52.5 | (0, 0, 1) | 0 |
| 2 | 2 | 2 | 0 | 11. 5 | 1 | 41.0 | 2 | 52.5 | (0, 1, 1) | 0 |
| 2 | 2 | 2 | 0 | 11. 5 | 1 | 41.0 | 2 | 52.5 | (1, 0, 0) | 1 |
| 2 | 2 | 2 | 0 | 11. 5 | 1 | 41.0 | 2 | 52.5 | (0, 0, 0) | 0 |
| ... | ... | ... | ... | ... | ... | ... | ... | ... | ... | ... |

Synthetic data-based simulator: The simulator utilizes the segmented customer WTP for all items, which in turn is defined based on predefined rules, to determine the optimal bundle price that maximizes the revenue (true price) for all bundles in different customer segments. The maximum revenue is termed as true revenue. To achieve this, for a given segment s and bundle b, an offer price was selected and iterated through d WTP values for the bundle. The bundle's WTP (WTP bundle) is the sum of the WTP values for the items in the bundle. The items' WTP is determined by randomly sampling from a predefined distribution (selected based on the segment s and predefined rules). If the WTP bundle is greater than or equal to the offer price, it can be assumed that one unit is sold at that price and add it to the total revenue.

Thus, the revenue (total revenue/d) at each offer price stored in store revenue was obtained. The true revenue is the maximum value in the store revenue, and the corresponding offer price is the true price.

Baseline approaches: The conventional bundle recommendation techniques that do not consider the pricing were excluded for the comparison with the present disclosure. Some approaches use online and real- time price testing for bundle pricing. However, three baseline techniques namely baseline1, baseline2, and baseline3 were considered to conceptually validate the present disclosure (NSABR) with generated data.

Baseline1: The baseline1 is of the present applicant, which is about recommendation of ancillary bundle offers for segmented customers using a single multi-layer perceptron classifier. However, this baseline1 does not consider the segmented customers based on their attributes. During the experiment, the nested MLP network of the present disclosure was replaced with the multi-layer perceptron classifier. The training data included were customer attributes, bundles, offered bundle prices, and purchase outcomes. The offered bundle price is taken as sum of price of item in the bundle. Comparing this baseline1 with the present disclosure validates the effectiveness of the nested MLP network of the present disclosure in predicting bundle purchase probability.

Baseline2: In this, the customized airline offer management was considered which utilizes the customer-item interaction data to form bundles and performs segmentation based on customer trip characteristic attributes. In this, first the segment-specific ancillary purchase probabilities and average ancillary spending are updated using the matrix factorization. Segment-specific bundle purchase probabilities were then obtained by multiplying the segment specific purchase probabilities of all included ancillaries and the counter-probabilities of all excluded ancillaries. The bundle prices were calculated as the sum of the items in the bundle, and expected revenue was calculated as the price multiplied by the probability of purchase.

Baseline3: In this baseline, the real-time price testing was simulated using a combination of the $\varepsilon$-greedy strategy and Thompson Sampling. Thompson Sampling, a method used by many researchers utilizes Beta distributions for each price point. The $\varepsilon$-greedy strategy starts with a high $\varepsilon$ for exploration and gradually reduces it to exploit the best-performing prices. Each iteration uses Thompson Sampling to select prices, with $\varepsilon$ probability for random exploration and 1-$\varepsilon$ probability for choosing the price with the highest sampled value from the Beta distribution. Customer interactions are simulated by sampling customers' WTP from a predefined distribution. Purchases occur if the price is less than or equal to the WTP. Beta distribution parameters ($\alpha$ and $\beta$) are updated based on these interactions-a increases for successful purchases and $\beta$ for failures. Revenue was computed by multiplying the estimated purchase probability, $\alpha/(\alpha + \beta)$, by the price to determine the optimal price that maximizes expected revenue. Thompson Sampling is applied across all bundles within each segment to optimize pricing.

Hyper-parameters setting: The nested MLP network of the present disclosure was implemented with an MLP architecture of $30 \to 10 \to 1$ and 16 latent factors for customer attributes and items. The nested MLP network was trained for 500 epochs with a learning rate of 0.001. For baseline1, the MLP classifier was used with an MLP architecture of $50 \to 1$ and a learning rate of 0.001. True revenue and price are calculated using d = 150, while Thompson Sampling is evaluated across 50 discrete price points.

Results: The following research questions (RQ) were addressed to validate the present disclosure (NSABR):

RQ1: Can the present disclosure (NSABR) optimally price bundles, and how does it compare to the baselines?
RQ2: What is the impact of bundle recommendations on revenue?

RQ1: Optimal bundle pricing and comparison with the baselines: To determine if the present disclosure (NSABR) optimizes bundle prices for maximum revenue, true revenue and true price were compared from synthetic data-based simulator with maximum bundle revenue and revenue-optimal bundle prices obtained from the present disclosure (NSABR) and baselines across bundles under different segments. Table. 2 shows the results of the optimal bundle pricing and comparison with the baselines. As shown in table. 2, the true revenue and price were closely aligned with the maximum bundle revenue and revenue-optimal bundle prices from the present disclosure (NSABR), respectively.

Table. 2

| Seg ment | Bun dle | Reve nue | Pri ce | Reve nue | Pri ce | Reve nue | Pric e | Reve nue | Pri ce | Reve nue | Pri ce |
|---|---|---|---|---|---|---|---|---|---|---|---|
| | | True | | NSABR | | Baseline1 | | Baseline2 | | Baseline3 | |
| (1, 2, 2) | (1, 0, 0) | 10.09 | 12. 2 | 10.18 | 11. 51 | 5.89 | 8.12 | 1.85 | 7.4 4 | 9.5 | 10. 0 |
| (1, 2, 2) | (0, 1,0) | 33.64 | 36. 3 | 34.85 | 35. 14 | 27.85 | 30.2 8 | 12.91 | 19. 92 | 32.4 | 35. 7 |
| (1, 2, 2) | (0, 0, 1) | 51 | 52. 4 | 48.63 | 49. 07 | 44.65 | 46.9 1 | 25.06 | 28. 33 | 47.6 | 50. 0 |
| (1, 2, 2) | (1, 1,0) | 45.5 | 48. 4 | 43.51 | 44. 01 | 56 | 59.3 6 | 14.77 | 27. 37 | 44.7 | 47. 1 |
| (1, 2, 2) | (1, 0, 1) | 63.5 | 63. 5 | 57.24 | 57. 79 | 71.46 | 74.1 4 | 26.91 | 35. 78 | 61.0 | 64. 3 |

(continued)

| Seg ment | Bun dle | Reve nue | Pri ce | Reve nue | Pri ce | Reve nue | Pric e | Reve nue | Pri ce | Reve nue | Pri ce |
|---|---|---|---|---|---|---|---|---|---|---|---|
| | | True | | NSABR | | Baseline1 | | Baseline2 | | Baseline3 | |
| (1, 2, 2) | (0, 1, 1) | 88.11 | 88. 7 | 83 | 83. 75 | 99.37 | 102. 23 | 37.98 | 48. 26 | 85.7 | 87. 1 |
| (1, 2, 2) | (1, 1, 1) | 101.1 2 | 10 1.8 | 91.52 | 92. 45 | 132.7 1 | 135. 56 | 39.83 | 55. 71 | 97.6 | 10 1.4 |
| (1, 2, 15) | (1, 0, 0) | 10.25 | 12. 2 | 9.32 | 15. 7 | 5.61 | 7.58 | 1.79 | 7.3 1 | 11.2 | 12. 9 |
| (1, 2, 15) | (0, 1,0) | 33.84 | 34. 3 | 36.63 | 36. 97 | 30.44 | 32.5 3 | 12.86 | 19. 35 | 32.3 | 32. 9 |
| (1, 2, 15) | (0, 0, 1) | 38.25 | 40. 4 | 37.63 | 40. 85 | 34.13 | 36.1 9 | 14.74 | 21. 97 | 37.9 | 38. 6 |
| (1, 2, 15) | (1, 1,0) | 45.82 | 47. 4 | 43.69 | 43. 91 | 47.86 | 50.9 | 14.65 | 26. 67 | 45.2 | 50. 0 |
| (1, 2, 15) | (1, 0, 1) | 50.77 | 54. 4 | 44.2 | 47. 51 | 58.41 | 61.1 | 16.53 | 29. 29 | 47.6 | 52. 9 |
| (1, 2, 15) | (0, 1, 1) | 76.57 | 77. 6 | 73.16 | 73. 87 | 87.68 | 90.4 8 | 27.61 | 41. 33 | 74.2 | 75. 7 |
| ... | ... | ... | ... | ... | ... | ... | ... | ... | ... | ... | ... |

Table. 3 shows the comparison results of the present disclosure (NSABR) with the baselines using root mean square error (RMSE) and mean absolute error (MAE) as the evaluation metrics.

Table. 3

| Model | Revenue | | Price | |
|---|---|---|---|---|
| | RMSE | MAE | RMSE | MAE |
| NSABR | 4.71 | 3.56 | 4.88 | 3.81 |
| Baseline1 | 11.53 | 8.70 | 11.91 | 8.86 |
| Baseline2 | 40.21 | 36.25 | 30.84 | 27.58 |
| Baseline3 | 9.15 | 7.29 | 8.78 | 7.15 |

As shown in table. 3, the bundle purchase probability estimation model (nested MLP network) of the present disclosure accurately learns bundle purchase probability from item-level data, outperforming three baselines. Baseline1's high error results from its inaccurate learning of bundle purchase probability, while baseline2's high error stems from calculating bundle price solely based on the average spending on ancillary items within a segment, without considering the demand curve.

The slightly higher error in baseline3 results from its limitation: Thompson Sampling is designed for a fixed set of discrete price points, making it effective for optimizing among a few predetermined prices. In contrast, the nested MLP network of the present disclosure models the relationship between price and demand within a segment as a continuous function. This approach allows it to estimate demand for any price within a range, rather than being limited to discrete price points. Thus, the lower error with the present disclosure (NSABR) demonstrates its ability to leverage historical patterns for accurate demand prediction and to understand complex relationships between price and demand within a segment.

RQ2: Impact of bundle recommendation on revenue: To verify how bundle recommendations enhance revenue, a scenario was analyzed where customers are presented with a set of three randomly sampled bundles. Random sampling helps capture the sensitivity of revenue to various bundle choices. The customers, based on their WTP for different bundles, can choose one. The total expected revenue was calculated for 20,000 customers and averaged it across them. Table. 4 shows the results of revenue comparison of the present disclosure (NSABR) with the baselines.

Table. 4

| Model | Revenue |
|---|---|
| True | 76.93 |
| NSABR | 79.94 |
| Baseline1 | 38.03 |
| Baseline2 | 48.43 |
| Baseline3 | 74.82 |

As shown in Table. 4, the present disclosure (NSABR) generated revenue is close to the true revenue, indicating that it can optimally price bundles for maximum revenue. The lower revenue with baseline 1 is because the optimal price of bundles with two or more items calculated using baseline1 is on the higher side of the customer's WTP, leading to a lower probability of these bundles being chosen when shown, and in turn, leading to less revenue. The revenue achieved with baseline3 is comparable to that of the True model and the present disclosure (NSABR). However, Thompson Sampling requires extensive price testing across all bundles to identify the optimal one, making it time-consuming and resource intensive.

In contrast, the approach of the present disclosure (NSABR) narrows down the possibilities to a manageable subset (by filtering out bundles with low purchase probabilities and focusing on those with higher relevance), allowing price optimization techniques to target the most promising bundles. Furthermore, the nested MLP network-based approach of the present disclosure (NSABR) can learn patterns and relationships in the data that apply to various bundles and price points. Instead of needing to test every possible combination of bundle and price, as Thompson Sampling would, the nested MLP network-based approach of the present disclosure (NSABR) can use its learned understanding to predict which prices will work best for different bundles.

This demonstrates that the present disclosure (NSABR) effectively learns bundle purchase probabilities and estimates optimal bundle prices to maximize revenue, outperforming baseline models in revenue per offer. In conclusion, the present disclosure (NSABR) offers the following benefits:

- The present disclosure (NSABR) works well with item-level historical purchase data, making it suitable for scenarios where only item purchase information is available.

- The present disclosure (NSABR) is particularly beneficial for industries such as airlines, hospitality, and travel, where ancillary services are offered and need to be bundled. The approach of the present disclosure (NSABR) incorporates attributes that impact demand, enabling effective bundling.

- With sufficient historical data, the present disclosure (NSABR) can deliver appreciable demand forecasts by capturing complex patterns in customer behavior.

- In one scenario, recommending bundles ranked based on bundle purchase probability can increase customer satisfaction. Combining this with revenue-centric recommendations can simultaneously enhance both customer satisfaction and revenue.

- The data preparation process of the present disclosure enables the creation of a rich dataset from potentially limited initial data, facilitating detailed analysis and model training. Also, representing attributes and items by embedding tackles the sparsity issue well.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of bundle recommendation using historical item-level purchase data. The methods and systems of the present disclosure optimally prices bundle to maximize revenue. The methods and systems of the present disclosure outperform the baseline models and closely align with true figures. It benefits service providers who lack bundle-level purchase data but have item-level purchase data. By segmenting customers based on travel attributes, the methods and systems of the present disclosure provide recommendations to individual needs, enhancing both revenue and customer satisfaction.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (300), comprising:

   receiving, via one or more hardware processors, an item-level purchase data of an entity, wherein the item-level purchase data comprises one or more customer attributes of each customer of a plurality of customers, a plurality of items shown to each customer of the plurality of customers, an offered price of each of the plurality of items, one or more items purchased by each customer of the plurality of customers out of the plurality of items, and one or more item attributes of each item of the plurality of items (302);

   identifying, via the one or more hardware processors, one or more customer segments based on the one or more customer attributes of each customer of the plurality of customers, wherein each customer segment of the one or more customer segments is associated with one or more customers out the plurality of customers (304);

   forming, via the one or more hardware processors, a plurality of ancillary bundles associated with each customer segment of the one or more customer segments using the item-level purchase data, wherein each of the plurality of ancillary bundles comprises one or more items out of the plurality of items and the offered price of each of the one or more items (306);

   estimating, via the one or more hardware processors, a bundle purchase probability of each of the plurality of ancillary bundles associated with each customer segment of the one or more customer segments, using a bundle purchase probability estimation model (308);

   determining, via the one or more hardware processors, a revenue maximized bundle price of each of the plurality of ancillary bundles associated with each customer segment of the one or more customer segments, based on the bundle purchase probability of each of the plurality of ancillary bundles (310); and

   recommending, via the one or more hardware processors, one or more ancillary bundles out of the plurality of ancillary bundles, based on the revenue maximized bundle price of each of the plurality of ancillary bundles (312).

2. The processor-implemented method (300) as claimed in claim 1, wherein the plurality of ancillary bundles is formed for each of the one or more customer segments based on a number of bundle combinations associated with the one or more items shown to the one or more customers present in the associated customer segment.

3. The processor-implemented method (300) as claimed in claim 1, wherein the bundle purchase probability estimation model is obtained by:

obtaining a training data associated with each of the one or more historical customer segments using a historical item-level purchase data, wherein the training data associated with each historical customer segment comprises the one or more customer attributes of each customer of the one or more customers present in an associated historical customer segment, the one or more items shown to the one or more customers present in the associated historical customer segment, the offered price of each of the one or more items shown to the one or more customers present in the associated historical customer segment, the one or more item attributes of each item of the one or more items shown to the one or more customers present in the associated historical customer segment, the plurality of historical ancillary bundles formed for the associated historical customer segment, and a bundle purchase ground-truth value of each of the plurality of historical ancillary bundles formed for the associated historical customer segment; and

training a nested Multi-layer Perceptron (MLP) neural network with the training data associated with each of the one or more historical customer segments, to obtain the bundle purchase probability estimation model, wherein the nested MLP neural network comprises a plurality of item-level MLP neural networks and a bundle purchase probability prediction function, and wherein each of the plurality of item-level MLP neural networks comprises an embedding layer, a concatenation layer, a MLP layer, and a sigmoid layer.

4. The processor-implemented method (300) as claimed in claim 3, wherein the bundle purchase ground-truth value of each of the plurality of historical ancillary bundles formed for each of the one or more customer segments is defined based on the one or more items purchased by each customer of the one or more customers present in the associated customer segment.

5. The processor-implemented method (300) as claimed in claim 3, wherein training the nested MLP neural network with the training data associated with each of the one or more historical customer segments, to obtain the bundle purchase probability estimation model, comprises:

passing individually (i) the one or more customer attributes of each customer of the one or more customers present in each historical customer segment, (ii) the one or more item attributes of each item shown to the one or more customers present in each historical customer segment, to the embedding layer of each of the plurality of item-level MLP neural networks, to obtain (i) a customer attribute embedding of each customer of the one or more customers present in each historical customer segment, and (ii) an item attribute embedding of each item shown to the one or more customers present in each historical customer segment, respectively (308a);

passing individually, (i) the customer attribute embedding of each customer of the one or more customers present in each historical customer segment, (ii) the item attribute embedding of each item shown to the one or more customers present in each historical customer segment, and (iii) the offered price of each item shown to the one or more customers present in each historical customer segment, to the concatenation layer of each of the plurality of item-level MLP neural networks, to obtain an item-level concatenated vector of each item shown to the one or more customers present in each historical customer segment, respectively (308b);

passing individually, the item-level concatenated vector of each item shown to the one or more customers present in each historical customer segment, to the MLP layer and the sigmoid layer of each of the plurality of item-level MLP neural networks, to obtain a probability of purchase of each item shown to the one or more customers present in each historical customer segment, respectively (308c);

passing the probability of purchase of each item shown to the one or more customers present in each historical customer segment, to the bundle purchase probability prediction function, to obtain a bundle purchase probability value of each of the plurality of historical ancillary bundles formed for each historical customer segment (308d);

calculating a value of a loss function of the nested MLP neural network, based on the bundle purchase probability value of each of the plurality of historical ancillary bundles formed for each historical customer segment and the bundle purchase ground-truth value of each of the plurality of historical ancillary bundles formed for each historical customer segment (308e);

updating one or more network weights of the nested MLP neural network based on the value of the loss function of the nested MLP neural network (308f); and

training the nested MLP neural network with the training data associated with each of the one or more historical customer segments, until the one or more historical customer segments are completed, to obtain the bundle purchase probability estimation model (308g).

6. A system (100), comprising:

a memory (102) storing instructions;
one or more input/output (I/O) interfaces (106);
one or more hardware processors (104) coupled to the memory (102) via the one or more I/O interfaces (106), wherein the one or more hardware processors (104) are configured by the instructions to:

receive via the one or more I/O interfaces (106), an item-level purchase data of an entity, wherein the item-level purchase data comprises one or more customer attributes of each customer of a plurality of customers, a plurality of items shown to each customer of the plurality of customers, an offered price of each of the plurality of items, one or more items purchased by each customer of the plurality of customers out of the plurality of items, and one or more item attributes of each item of the plurality of items;
identify one or more customer segments based on the one or more customer attributes of each customer of the plurality of customers, wherein each customer segment of the one or more customer segments is associated with one or more customers out the plurality of customers;
form a plurality of ancillary bundles associated with each customer segment of the one or more customer segments using the item-level purchase data, wherein each of the plurality of ancillary bundles comprises one or more items out of the plurality of items and the offered price of each of the one or more items;
estimate a bundle purchase probability of each of the plurality of ancillary bundles associated with each customer segment of the one or more customer segments, using a bundle purchase probability estimation model;
determine a revenue maximized bundle price of each of the plurality of ancillary bundles associated with each customer segment of the one or more customer segments, based on the bundle purchase probability of each of the plurality of ancillary bundles; and
recommend one or more ancillary bundles out of the plurality of ancillary bundles, based on the revenue maximized bundle price of each of the plurality of ancillary bundles.

7. The system (100) as claimed in claim 6, wherein the plurality of ancillary bundles is formed for each of the one or more customer segments based on a number of bundle combinations associated with the one or more items shown to the one or more customers present in the associated customer segment.

8. The system (100) as claimed in claim 6, wherein the one or more hardware processors (104) are configured to obtain the bundle purchase probability estimation model, by:

obtaining a training data associated with each of the one or more historical customer segments using a historical item-level purchase data, wherein the training data associated with each historical customer segment comprises the one or more customer attributes of each customer of the one or more customers present in an associated historical customer segment, the one or more items shown to the one or more customers present in the associated historical customer segment, the offered price of each of the one or more items shown to the one or more customers present in the associated historical customer segment, the one or more item attributes of each item of the one or more items shown to the one or more customers present in the associated historical customer segment, the plurality of historical ancillary bundles formed for the associated historical customer segment, and a bundle purchase ground-truth value of each of the plurality of historical ancillary bundles formed for the associated historical customer segment; and
training a nested Multi-layer Perceptron (MLP) neural network with the training data associated with each of the one or more historical customer segments, to obtain the bundle purchase probability estimation model, wherein the nested MLP neural network comprises a plurality of item-level MLP neural networks and a bundle purchase probability prediction function, and wherein each of the plurality of item-level MLP neural networks comprises an embedding layer, a concatenation layer, a MLP layer, and a sigmoid layer.

9. The system (100) as claimed in claim 8, wherein the bundle purchase ground-truth value of each of the plurality of historical ancillary bundles formed for each of the one or more customer segments is defined based on the one or more items purchased by each customer of the one or more customers present in the associated customer segment.

10. The system (100) as claimed in claim 8, wherein the one or more hardware processors (104) are configured to train the nested MLP neural network with the training data associated with each of the one or more historical customer segments, to obtain the bundle purchase probability estimation model, by:

passing individually (i) the one or more customer attributes of each customer of the one or more customers present in each historical customer segment, (ii) the one or more item attributes of each item shown to the one or more customers present in each historical customer segment, to the embedding layer of each of the plurality of item-level MLP neural networks, to obtain (i) a customer attribute embedding of each customer of the one or more customers present in each historical customer segment, and (ii) an item attribute embedding of each item shown to the one or more customers present in each historical customer segment, respectively;

passing individually, (i) the customer attribute embedding of each customer of the one or more customers present in each historical customer segment, (ii) the item attribute embedding of each item shown to the one or more customers present in each historical customer segment, and (iii) the offered price of each item shown to the one or more customers present in each historical customer segment, to the concatenation layer of each of the plurality of item-level MLP neural networks, to obtain an item-level concatenated vector of each item shown to the one or more customers present in each historical customer segment, respectively;

passing individually, the item-level concatenated vector of each item shown to the one or more customers present in each historical customer segment, to the MLP layer and the sigmoid layer of each of the plurality of item-level MLP neural networks, to obtain a probability of purchase of each item shown to the one or more customers present in each historical customer segment, respectively;

passing the probability of purchase of each item shown to the one or more customers present in each historical customer segment, to the bundle purchase probability prediction function, to obtain a bundle purchase probability value of each of the plurality of historical ancillary bundles formed for each historical customer segment;

calculating a value of a loss function of the nested MLP neural network, based on the bundle purchase probability value of each of the plurality of historical ancillary bundles formed for each historical customer segment and the bundle purchase ground-truth value of each of the plurality of historical ancillary bundles formed for each historical customer segment;

updating one or more network weights of the nested MLP neural network based on the value of the loss function of the nested MLP neural network; and

training the nested MLP neural network with the training data associated with each of the one or more historical customer segments, until the one or more historical customer segments are completed, to obtain the bundle purchase probability estimation model.

11. One or more non-transitory machine-readable information storage mediums comprising one or more instructions which when executed by one or more hardware processors cause:

receiving an item-level purchase data of an entity, wherein the item-level purchase data comprises one or more customer attributes of each customer of a plurality of customers, a plurality of items shown to each customer of the plurality of customers, an offered price of each of the plurality of items, one or more items purchased by each customer of the plurality of customers out of the plurality of items, and one or more item attributes of each item of the plurality of items;

identifying one or more customer segments based on the one or more customer attributes of each customer of the plurality of customers, wherein each customer segment of the one or more customer segments is associated with one or more customers out the plurality of customers;

forming a plurality of ancillary bundles associated with each customer segment of the one or more customer segments using the item-level purchase data, wherein each of the plurality of ancillary bundles comprises one or more items out of the plurality of items and the offered price of each of the one or more items;

estimating a bundle purchase probability of each of the plurality of ancillary bundles associated with each customer segment of the one or more customer segments, using a bundle purchase probability estimation model;

determining a revenue maximized bundle price of each of the plurality of ancillary bundles associated with each customer segment of the one or more customer segments, based on the bundle purchase probability of each of the plurality of ancillary bundles; and

recommending one or more ancillary bundles out of the plurality of ancillary bundles, based on the revenue maximized bundle price of each of the plurality of ancillary bundles.

12. The one or more non-transitory machine-readable information storage mediums as claimed in claim 11, wherein the plurality of ancillary bundles is formed for each of the one or more customer segments based on a number of bundle combinations associated with the one or more items shown to the one or more customers present in the associated customer segment.

13. The one or more non-transitory machine-readable information storage mediums as claimed in claim 11, wherein obtaining the bundle purchase probability estimation model, comprises:

obtaining a training data associated with each of the one or more historical customer segments using a historical item-level purchase data, wherein the training data associated with each historical customer segment comprises the one or more customer attributes of each customer of the one or more customers present in an associated historical customer segment, the one or more items shown to the one or more customers present in the associated historical customer segment, the offered price of each of the one or more items shown to the one or more customers present in the associated historical customer segment, the one or more item attributes of each item of the one or more items shown to the one or more customers present in the associated historical customer segment, the plurality of historical ancillary bundles formed for the associated historical customer segment, and a bundle purchase ground-truth value of each of the plurality of historical ancillary bundles formed for the associated historical customer segment; and

training a nested Multi-layer Perceptron (MLP) neural network with the training data associated with each of the one or more historical customer segments, to obtain the bundle purchase probability estimation model, wherein the nested MLP neural network comprises a plurality of item-level MLP neural networks and a bundle purchase probability prediction function, and wherein each of the plurality of item-level MLP neural networks comprises an embedding layer, a concatenation layer, a MLP layer, and a sigmoid layer.

14. The one or more non-transitory machine-readable information storage mediums as claimed in claim 13, wherein the bundle purchase ground-truth value of each of the plurality of historical ancillary bundles formed for each of the one or more customer segments is defined based on the one or more items purchased by each customer of the one or more customers present in the associated customer segment.

15. The one or more non-transitory machine-readable information storage mediums as claimed in claim 13, wherein training the nested MLP neural network with the training data associated with each of the one or more historical customer segments, to obtain the bundle purchase probability estimation model, comprises:

passing individually (i) the one or more customer attributes of each customer of the one or more customers present in each historical customer segment, (ii) the one or more item attributes of each item shown to the one or more customers present in each historical customer segment, to the embedding layer of each of the plurality of item-level MLP neural networks, to obtain (i) a customer attribute embedding of each customer of the one or more customers present in each historical customer segment, and (ii) an item attribute embedding of each item shown to the one or more customers present in each historical customer segment, respectively;

passing individually, (i) the customer attribute embedding of each customer of the one or more customers present in each historical customer segment, (ii) the item attribute embedding of each item shown to the one or more customers present in each historical customer segment, and (iii) the offered price of each item shown to the one or more customers present in each historical customer segment, to the concatenation layer of each of the plurality of item-level MLP neural networks, to obtain an item-level concatenated vector of each item shown to the one or more customers present in each historical customer segment, respectively;

passing individually, the item-level concatenated vector of each item shown to the one or more customers present in each historical customer segment, to the MLP layer and the sigmoid layer of each of the plurality of item-level MLP neural networks, to obtain a probability of purchase of each item shown to the one or more customers present in each historical customer segment, respectively;

passing the probability of purchase of each item shown to the one or more customers present in each historical customer segment, to the bundle purchase probability prediction function, to obtain a bundle purchase probability value of each of the plurality of historical ancillary bundles formed for each historical customer segment;

calculating a value of a loss function of the nested MLP neural network, based on the bundle purchase probability value of each of the plurality of historical ancillary bundles formed for each historical customer segment and the bundle purchase ground-truth value of each of the plurality of historical ancillary bundles formed for each historical customer segment;

updating one or more network weights of the nested MLP neural network based on the value of the loss function of the nested MLP neural network; and

training the nested MLP neural network with the training data associated with each of the one or more historical customer segments, until the one or more historical customer segments are completed, to obtain the bundle purchase probability estimation model.

System **100**

**108**

Memory **102**

Modules **102a**

Repository **102b**

I/O interface(s) **106**

Hardware
processor(s) **104**

FIG. 1

Item-level purchase data →

**202**
Data preparation module

→

**204**
Bundle purchase probability estimation module

→

**206**
Revenue optimal bundle pricing module

↓

**208**
Recommendation module

↑

Customer → Identify the customer segment

Top-N recommended bundles

FIG. 2

300

Receive an item-level purchase data of an entity, wherein the item-level purchase data comprises one or more customer attributes of each customer of a plurality of customers, a plurality of items shown to each customer of the plurality of customers, an offered price of each of the plurality of items, one or more items purchased by each customer of the plurality of customers out of the plurality of items, and one or more item attributes of each item of the plurality of items

302

Identify one or more customer segments based on the one or more customer attributes of each customer of the plurality of customers, wherein each customer segment of the one or more customer segments is associated with one or more customers out the plurality of customers

304

Form a plurality of ancillary bundles associated with each customer segment of the one or more customer segments using the item-level purchase data, wherein each of the plurality of ancillary bundles comprises one or more items out of the plurality of items and the offered price of each of the one or more items

306

Estimate a bundle purchase probability of each of the plurality of ancillary bundles associated with each customer segment of the one or more customer segments, using a bundle purchase probability estimation model

308

Determine a revenue maximized bundle price of each of the plurality of ancillary bundles associated with each customer segment of the one or more customer segments, based on the bundle purchase probability of each of the plurality of ancillary bundles

310

Recommend one or more ancillary bundles out of the plurality of ancillary bundles, based on the revenue maximized bundle price of each of the plurality of ancillary bundles

312

FIG. 3

| Customer 1 | | Items | Price |
|---|---|---|---|
| ☐ | | Item 1 | p1 |
| ✓ | | Item 2 | p2 |

| Customer 2 | | Items | Price |
|---|---|---|---|
| ✓ | | Item 1 | p3 |
| ☐ | | Item 2 | p4 |

| Customer | Item | Price | Item configuration/ Bundle |
|---|---|---|---|
| 1 | [i1,i2] | [p1,p2] | [0,1] |
| 2 | [i1,i2] | [p3,p4] | [1,0] |

Negative sampling

| Customer | Item | Price | Item configuration/ Bundle |
|---|---|---|---|
| 1 | [i1,i2] | [p1,p2] | [0,1] |
| 1 | [i1,i2] | [p1,p2] | [1,0] |
| 2 | [i1,i2] | [p3,p4] | [1,0] |
| 2 | [i1,i2] | [p3,p4] | [0,1] |

FIG. 4

22

Probability of
purchase of bundle
@ item shown at
prices $p_1$, $p_2$, ..., $p_m$

Ground-truth
value (0/1).

Training

Bundle purchase probability
prediction function
$P_{b@p}$

Probability of purchase
of individual items @
price

Sigmoid layer

MLP layer

Concatenation layer

Customer features
embedding
$f_1$, $f_2$, ..., $f_n$

Item 1
embedding $e_1$

$p_1$

Embedding layer

Sigmoid layer

MLP layer

Concatenation layer

Customer features
latent vector
$f_1$, $f_2$, ..., $f_n$

Item 2
embedding $e_2$

$p_2$

Embedding layer

...

...

...

| Inputs | Customer attributes | Item 1 attributes | Item 1 price ($p_1$) | Item 2 attributes | Item 2 price ($p_2$) | ... | Bundle |
|--------|---------------------|-------------------|------------------|-------------------|------------------|-----|--------|
| | | All items and offer prices | | | | | |

FIG. 5

Passing individually (i) the one or more customer attributes of each customer of the one or more customers present in each historical customer segment, (ii) the one or more item attributes of each item shown to the one or more customers present in each historical customer segment, to the embedding layer of each of the plurality of item-level MLP neural networks, to obtain (i) a customer attribute embedding of each customer of the one or more customers present in each historical customer segment, and (ii) an item attribute embedding of each item shown to the one or more customers present in each historical customer segment, respectively

308a

Passing individually, (i) the customer attribute embedding of each customer of the one or more customers present in each historical customer segment, (ii) the item attribute embedding of each item shown to the one or more customers present in each historical customer segment, and (iii) the offered price of each item shown to the one or more customers present in each historical customer segment, to the concatenation layer of each of the plurality of item-level MLP neural networks, to obtain an item-level concatenated vector of each item shown to the one or more customers present in each historical customer segment, respectively

308b

Passing individually, the item-level concatenated vector of each item shown to the one or more customers present in each historical customer segment, to the MLP layer and the sigmoid layer of each of the plurality of item-level MLP neural networks, to obtain a probability of purchase of each item shown to the one or more customers present in each historical customer segment, respectively

308c

Passing the probability of purchase of each item shown to the one or more customers present in each historical customer segment, to the bundle purchase probability prediction function, to obtain a bundle purchase probability value of each of the plurality of historical ancillary bundles formed for each historical customer segment

308d

A

FIG. 6A

A

Calculating a value of a loss function of the nested MLP neural network, based on the bundle purchase probability value of each of the plurality of historical ancillary bundles formed for each historical customer segment and the bundle purchase ground-truth value of each of the plurality of historical ancillary bundles formed for each historical customer segment     308e

Updating one or more network weights of the nested MLP neural network based on the value of the loss function of the nested MLP neural network     308f

Training the nested MLP neural network with the training data associated with each of the one or more historical segments, until the one or more historical customer segments are completed, to obtain the bundle purchase probability estimation model     308g

FIG. 6B

Europäisches
Patentamt

European
Patent Office

Office européen
des brevets

## EUROPEAN SEARCH REPORT

**Application Number**

EP 25 20 3551

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SWAMI AAKASH ET AL: "A Data-Driven Approach for Ancillary Bundle Recommendation to Segmented Users", 9 December 2024 (2024-12-09), 2024 IEEE INTERNATIONAL CONFERENCE ON DATA MINING WORKSHOPS (ICDMW), IEEE, PAGE(S) 606 - 612, XP034864923, [retrieved on 2025-03-18] * the whole document * | 1-15 | INV. G06Q30/0201 G06Q30/0202 G06Q30/0204 G06Q30/0601 |
| X | LI MIAO ET AL: "A Survey of Researches on Personalized Bundle Recommendation Techniques", SPRINGER, vol. 26, no. 506775, 31 December 2020 (2020-12-31), pages 290-304, XP047569196, * the whole document * | 1-15 | |

-----

-----

TECHNICAL FIELDS
SEARCHED (IPC)

G06Q

The present search report has been drawn up for all claims

| Place of search | Date of completion of the search | Examiner |
|---|---|---|
| The Hague | 9 February 2026 | Moynihan, Maurice |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421097229